Europäisches Patentamt

European Patent Office

Office européen des brevets

(11) Publication number: **0 382 181**
**A2**

# (12) EUROPEAN PATENT APPLICATION

(21) Application number: 90102391.1

(51) Int. Cl.5: **F16L 9/08, B28B 21/30**

(22) Date of filing: **07.02.90**

(30) Priority: **08.02.89 IT 1935489**

(43) Date of publication of application:
**16.08.90 Bulletin 90/33**

(84) Designated Contracting States:
**AT BE CH DE DK ES FR GB GR IT LI LU NL SE**

(71) Applicant: FIBRONIT S.r.l.
Via Mameli, 4
I-15033 Casale Monferrato (Alessandria)(IT)

(72) Inventor: Magnani, Silvio
Via Colombarone, 78
I-27044 Canneto Pavese, Pavia(IT)

(74) Representative: Gervasi, Gemma, Dr. et al
NOTARBARTOLO & GERVASI Srl 33, Viale
Bianca Maria
I-21100 Milano(IT)

(54) Concrete tubing reinforced with glass fibres and plastic material nets.

(57) Concrete tubing reinforced with glass fibres and plastic material nets, consisting of several superimposed layers obtained by a mixture of cement, water, inert substances, possibly additives, one or more of said layers containing said glass fibres and plastic material nets. The process for manufacturing said tubing consists in repeatedly winding on a suitable mandrel a layer of the cement mixture in which glass fibres and plastic material nets are incorporated until the desired thickness is reached.

fig 1

EP 0 382 181 A2

## Invention Field

The present invention refers to cement tubing reinforced with glass fibres and plastic material nets.

## Prior Art

Cement tubes incorporating fibres, to enhance their tensile strength are known. To this end asbestos fibres, synthetic staple or glass fibres are used: cellulose or cotton fibres may be added to facilitate the preparation of the product.

In the past asbestos reinforced cement tubes were of general use for water or sewage lines.

However, the use of asbestos is now severely restricted because of its toxic properties.

Staple reinforced tubes have only been made experimentally. In fact, serious difficulties are encountered in obtaining uniform dispersions of said fibres in the cement and water mixture, and in reaching their adhesion to the cement after hardening. Above all, the cost of such materials has proved to be too high for practical purposes.

For the manufacture of glass fibre reinforced products, the only processes up to now suitable are mold casting processes, which are of limited use because of the necessity of ejection taper in the molds, while only rather thick objects can be made. Glass fibre reinforced products are furthermore prone to become brittle with age.

Cellulose and cotton are employed only rarely for reinforcing cement products, for example in ventilation conduits, where mechanical stresses are generally minor; otherwise these fibres are used only together with one of the other mentioned fibres to facilitate the manufacture of the tubing.

## Summary of the invention

We now have found new reinforced cement tubes which show good mechanical properties and which may be produced at a commercially acceptable cost.

Said tubes are characterized in that they consist of several superimposed layers obtained from a mixture of cement, water, inert substances and possible additives, one or more of said layers containing glass fibres and plastic material nets.

The process for manufacturing said tubes is characterized in that a layer of the cement mixture containing glass fibres and plastic material nets is repeatedly wound on a suitable mandrel until the desired thickness is reached. The surface layers may be exempt from fibre, in order to impart a better appearance to the finished product.

## Detailed description of the invention

Characteristics and advantages of the tubes of the present invention and of their manufacturing process will be further evidenced by the following detailed description.

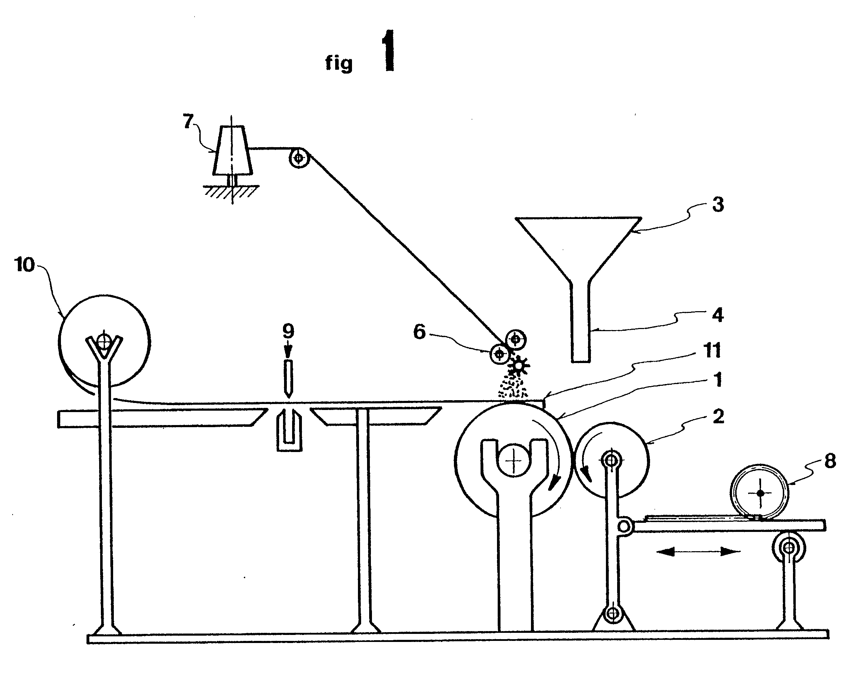

Fig. 1 shows schematically an apparatus for the production of tubes according to the invention, based on the use of a draining surface mandrel.

With reference to the single numerical symbols, it comprises a mandrel 1, which is rotatable in the direction of the arrow, and a modelling roll 2 situated in the vicinity of mandrel 1 and rotatable in the opposite direction.

The mandrel cylinder on which the tube will be formed shows a plurality of regularly distributed small holes to allow the drainage of water.

Furthermore, in order to avoid occlusion of the holes the mandrel is covered with a cloth.

The apparatus also comprises: a hopper 3 for feeding the cement paste; the feeding can also be done by means of a paddle feeder or other suitable known means, reels 7 for feeding the glass filaments, which are cut to measure by feeder-cutter 6, a reel 10 for feeding the plastic net, and a device for adjusting the distance between mandrel 1 and roll 2.

For the manufacture of the tubes, the cement paste is poured from hopper 3, through conduit 4 in the trough longitudinally limited by mandrel 1 and roll 2 and frontally by two suitable shim adjusters.

At each turn of the mandrel 1 the distance between mandrel and roll is slightly increased by device 8, while, through suction generated by a vacuum pump (not shown) connected with the inside of mandrel 1, a layer of the paste is made to adhere to the mandrel surface, its thickness being adjusted by roll 2, the axial distance between mandrel and roll being increased at each turn by 0 to 5 mm. The end 11 of the net to be incorporated, in the tube being formed is placed on the mandrel preferably after the formation of a first layer, in order to have the inside surface of the tube uniformly smooth without emerging fibres.

Proceeding in the formation of layers, the net is wound on the mandrel while impregnated with the cement paste fed from 4. The glass fibres fed from reels 7 are distributed on the advancing net to be wound. The net is preferably cut off to a point prior to the termination of the tube formation.

According to a preferred embodiment, the glass fibres are distributed by a feeding-cutting device 6 which receives the continuous filaments coming from reels 7, cuts them in a predetermined length between 5 and 200 mm, preferably between 20 and 50 mm and distributes them regularly on the underlying net. The glass fibres are then embedded in the cement paste forming the tube, together with the net.

Alternatively, the glass fibres may be premixed in the cement paste. Once reached the desired thickness, the tube formation is stopped. Winding of the net is preferably stopped, by action of cutting device 9, prior to reaching the final thickness in order to have an outer layer consisting only of cement paste which will cover the fibrous material so that the tube will have a smooth outer surface.

Feeding of the glass fibres can be adjusted during the winding process in order to reinforce, if necessary, the layers where a higher mechanical resistance is desirable. In case, for instance, that a tube is needed having a particular resistance to an external ovalizing stress, it will be advisable to concentrate the fibres near the innermost and the outermost surfaces, while in case the tube is expected to withstand flexural longitudinal stresses, the fibres should be concentrated in the center of the tube rather than in the sides.

Similarly, one can vary the distribution of the plastic nets, providing net bundles of suitable width the inclusion of which during the winding operation may be programmed as needed.

Once the tube is ready, the mandrel is removed and the tube extracted while recovering the underlying cloth, according to techniques known from the asbestos-cement technology.

The process may be carried out using mandrels of various sections such as rectangular or square, if tubes of such sections are desired.

Various changes can be made in the process without departing from the spirit of the invention.

For instance, the plastic material net may be cut according to need for the preparation of a single tube, and fed from a suitably located container.

Also, instead of cut fibres, continuous glass fibres may be used as received from the reels and wound on the mandrel as it turns.

In general, the manufacture of tubes according to the invention may be carried out with the aid of devices different from the one described, provided they are suitable for winding repeatedly under compression a thin layer of cement paste incorporating reinforcing fibres.

One can for instance use an apparatus comprising: a continuous permeable belt conveyor on the top surface of which a layer of cement paste incorporating a plastic material net and glass fibres is formed, which paste is then taken up by a mandrel and wound up on it until the desired thickness is reached; one or more stations for feeding and cutting the net; and one or more stations for feeding the glass fibres on the cement paste before it is wound on the mandrel. Operation with an apparatus of said type comprises:

a) formation of a cement paste layer reinforced with glass fibres and plastic material nets on the horizontal stretch of the continuous permeable belt;

b) repeated winding up of said layer on a mandrel, until the desired thickness is reached;

c) cutting the net at the moment the tube is completed.

As employed in this application, the term cement comprises any water setting binder, such as Portland cement. As inert material any substance is intended which can be added to a water-cement paste without taking part in the setting and hardening process, such as sand. With the term "additive" we intend any chemical product which, when added to the cement paste, noticeably modifies its working up properties or its final characteristics and/or its setting time.

As cement paste, a mixture is intended consisting of water, cement, possibly inert material and additives. Plastic material nets are in general of the type obtained by fibrillation of plastic, orientable films apt to fibrillate. Such nets may be stretched and stabilized and may consist of a plurality of superimposed fibrillated films with different orientations, or of a single fibrillated film. However, one can also employ nets obtained by regular or irregular crosslinking of short or continuous filaments suitably stretched and stabilized if necessary. Also felts or non-woven fabrics can be used.

Also acrylic fibres netting may be used.

Glass fibres may be used as continuous filaments or as staple, cut to pre-established length to facilitate its distribution in bulk.

Glass fibres may also be used in the form of variously enmeshed nets or of webs, obtained by suitably felting the fibres by addition, if necessary, of a fixating size.

In the process of the present invention the various materials should be preferably employed in the amounts (wt. %) that follow:

The cement paste should preferably consist of:
cement 50-85 % of dry wt.
inert materials 10-50 % of dry wt.
additives 0-15 % of dry wt.
water 20-50 % of dry wt.

Usually, for reasons of economy, the plastic material net is preferably obtained from fibrillated prolypropylene film, while the glass fibre should be of the alkali-resistant type and is preferably cut in 5-100 mm, preferably 20-50 mm lengths.

The single tube layers should preferably have a thickness not higher than 5 mm, while the total thickness of the tube may be from 5 to 100 mm.

The glass fibre and plastic material net reinforcement is preferably made from second up to the penultimate layer.

The final product has a fibre content (wt %) of 0.2 to 7 and preferably of 0.5 to 5, and of plastic material of 0.2 to 7, and preferably from 0.5 to 5.

The process of the present application is suitable for the manufacture of tubings of the same diameter and thickness range as for current asbestos-cement tubes. Their diameter may be between 50 and 2000 mm. They have a good mechanical resistance, high resilience and an excellent resistance to water and to aging.

A further advantage consists of the fact that the tubes according to the invention may be obtained with a content of plastic material such as to be classified as fireproof materials.

Finally the tubes are produced at commercially acceptable costs.

From the tubes according to the invention one may mechanically obtain accessories for pipe lines such as sleeves or other special shapes.

The mechanical working may be made on the hardened tubes or by shaping the material forming the tube prior to the setting. With devices apt to operate according to the described process on suitable mandrels it is also possible to manufacture containers.

## Claims

1. Concrete tubing reinforced with glass fibres and plastic material nets, characterized by consisting of a plurality of superimposed layers obtained from a mixture of cement, water, inert substances and possibly additives, one or more of said layers containing glass fibres and plastic material nets.

2. Tubing according to claim 1, characterized by containing cement, inert substances and additives in amounts of respectively 50 to 85, 10 to 50 and 0 to 15 percent by weight.

3. Tubing according to claim 1, characterized by a content of glass fibres and plastic material net of between 0.2 and 7, respectively 0.2 and 7 percent by weight.

4. Tubing according to claim 1, characterized by a content of glass fibres and plastic material net comprised between 0.5 and 5 respectively 0.5 and 5 percent by weight.

5. Tubing according to claim 1, characterized in that said glass fibres are of the alkali resistant type.

6. Tubing according to claim 1, characterized in that said glass fibres are cut in lengths of between 5 to 100 mm.

7. Tubing according to claim 1, characterized in that said glass fibres are cut in langhts of between 20 and 50 mm.

8. Tubing according to claim 1, characterized in that said glass fibres are continuous fibres.

9. Tubing according to claim 1, characterized in that said glass fibres are crossed in the form of nets.

10. Tubing according to claim 1, characterized in that said glass fibres are in the form of a web.

11. Tubing according to claim 1, characterized in that said plastic material nets are of the type obtainable by fibrillation of orientable plastic material films.

12. Tubing according to claim 1, characterized in that said plastic material nets are obtained from fibrillated polypropylene film.

13. Tubing according to claim 1, characterized in that said nets are formed of a regular or irregular plaiting of plastic material fibres.

14. Tubing according to claim 1, characterized in that said nets consist of woven acrylic fibres.

15. Tubing according to claim 1, characterized in that said nets consist of felts obtained from plastic material fibres in the form of unwoven fabrics.

16. Tubing according to claim 1, characterized in that said inert substance is sand.

17. Tubing according to claim 1, characterized in that said additive is a fluidizing substance.

18. Tubing according to claim 1, characterized in that said layers have a thickness of 0 up to 5 mm.

19. Tubing according to claim 1, characterized in that the innermust and the outermost layer do not comprise glass fibres or plastic material nets.

20. Tubing according to claim 1, characterized in that they have a thickness of between 5 and 100 mm.

21. Tubing according to claim 1, characterized in that they have a diameter of between 50 and 2000 mm.

22. Tubing according to claim 1, characterized in that they are of circular cross section.

23. Tubing according to claim 1, characterized in that they are of square cross section.

24. Tubing according to claim 1, characterized in that they are of rectangular cross section.

25. Manufactured articles, such as sleeves, curves and similar shaped tubes made from the tubing of claim 1.

26. Manufactured articles according to claim 25, when made by mechanical working of the tubing prior to the setting.

27. Equipment for the manufacture of cement tubing reinforced with glass fibres and plastic material nets, comprising: a mandrel (1); a roll (2); a hopper (3) for feeding the cement paste; reels (7) for feeding the glass fibres; cutter (6) for cutting the glass fibre in a predetermined length; reel (10) for feeding the plastic material net; cutter (9) for cutting the plastic material net; device (8) for varying the axial distance between mandrel (1) and roll (2).

28. Equipment according to claim 27, characterized in that mandrel (1) works under inside suction.

29. Equipment according to claim 27, in which the mandrel has square or rectangular shape.

30. Equimpent for the manufacture of cement tubing reinforced with glass fibres and plastic material nets, comprising a permeable continuous belt conveyor on the top surface of which a layer of cement paste incorporating glass fibres and plastic material net is formed, a station where the cement layer is separated from the conveyor surface and wound up continuously on a mandrel, one or more cutting devices for cutting the plastic material net as well as devices for distributing the glass fibres.

31. Process for the manufacture of cement tubing reinforced with glass fibres and plastic material nets comprising repeated winding on a suitable mandrel of cement paste layers containing glass fibres and a plastic material net up to reaching the desired thickness, the superficial layers being possibly exempt of said fibres and net.

32. Process according to claim 31, characterized in that:

a) the cement paste is fed in a trough formed by mandrel (1) and roll (2);

b) at each turn of the mandrel the axial distance between mandrel (1) and roll (2) is increased so as to form a plurality of cement paste layers on the mandrel;

c) during the formation of one or more of said layers, glass fibres and plastic material net are fed on the mandrel;

d) said nets are cut prior to the termination of the tube formation.

33. Process according to claim 31, characterized in that said cement paste consists by weight on the dry material of 50 to 85 percent of cement, 10 to 50 percent inert material, 0 to 15 percent additives and 20 to 50 percent water.

34. Process according to claim 31, characterized in that at each turn of the mandrel the axial distance between mandrel (1) and roll (2) is increased of 0 to 5 mm.

35. Process according to claim 31, characterized in that the plastic material net is fed from reel (10), wound on mandrel (1) and cut by cutter (9).

36. Process according to claim 31, characterized in that said glass fibres net are fed from reel (7), measured and cut by device (6) and spread on the plastic material net which proceeds to be wound on the mandrel.

37. Process according to claim 31, characterized in that said glass fibres are fed from reels (7) and wound on the mandrel as a continuous filament.

38. Process according to claim 31, characterized in that the glass fibres are admixed with the cement paste prior to its winding in the mandrel.

39. Process according to claim 31, characterized in that no glass fibres or plastic material net are fed during the formation of the innermost or of the outermost layer of the tube.

40. Process according to claim 31, characterized in that the distribution of the reinforcing fibres in the paste is not uniform, the fibres prevailing in the zones where a higher mechanical resistance is needed.

41. Process for the manufacture of cement tubing reinforced with glass fibres and plastic material nets, comprising:

a) forming a layer of cement paste reinforced with glass fibres and plastic material nets on the horizontal surface of a continuous belt conveyor;

b) winding repeatedly said layer on a mandrel until the desired thikness is reached;

c) mechanically cutting the net so that its winding stops at the time the tube is formed.

fig 1